# EUROPEAN PATENT APPLICATION

(11) **EP 1 411 415 A1**
(43) Date of publication of application: **21.04.2004**
(21) Application number: 02354164.2
(22) Date of filing: 18.10.2002
(51) Int. Cl.: G06F 1/18

(54) **Component mounting system**

(71) Applicant: Hewlett-Packard Company, Palo Alto, CA 94304 (US)
(72) Inventor: Rahmouni, Gilbert, 38640 Claix (FR); Astier, Christian, 38420 Domene (FR)
(74) Representative: Lloyd, Richard Graham

(57) **Abstract**

A computer (10) is provided with a casing (12) which includes a component mounting system (18) for mounting a component (16) within the casing (12). The system includes a component support (22) securable to the casing (12); a plurality of posts (44,46) mounted on at least one sprung member (48), which is mounted to the support (22). The posts (44,46) are operable to be engaged in at least one associated recess in the component (16) and are movable between a component engaging position and a component non-engaging position. A slider (28) is slidable relative to the posts (44,46) and is operable to move and retain the posts (44,46) between the component engaging position and said component non-engaging position. A component can be removed and fitted into the computer (10) easily even by an untrained user.

## Description

### Field of the Invention:

The present invention relates to a component mounting system for use in mounting, for example, computer components within a computer and also to a computer employing such a mounting system.

### Background of the Invention:

Modem personal computers are typically provided with a plurality of components which are mounted within and to the casing of the computer. Such components typically include floppy disc drives, CD-ROM drives, DVD drives, hard disc drives and so on.

Traditionally, these components have been secured to the computer casing, typically to brackets integral with computer casing, by screws. Although this arrangement provides effective securing of the components to the computer casing, there are times when they need to be removed, for example for repair and/or to be replaced with new components. In such an event, it is necessary to gain access to the interior of the computer casing, to remove the screws, remove the component, replace it and secure the replacement with the self-tapping screws, before closing the casing again. Although this is an operation which can be performed by the end user many end users are reluctant to do so because of the apparent complexity of the procedure. The result is either that the user must pay for a service technician to replace the component or, particularly if the replacement is carried out under warranty, that this is done at the expense of the computer manufacturer.

Attempts have been made to simplify the mounting of such components within a personal computer. Examples can be found, for example, in United States patent no. 4,979,909, no. 5,262,923 and no. 5,828,547, amongst others.

Another, more recent, mounting system, which has been proven effective, is disclosed in the applicant's earlier United States patent number 6,299,266. This patent discloses a system in which a computer component such as a disc drive can be removed from a personal computer without having to open the computer casing and without the need to remove screws. The fixing of the component to the computer is achieved via a removable tray which is provided with a plurality of posts which fit in to associated recesses in the case of the component. These pins also provide for the ground connection for the component. However, this system requires the provision of a removable tray and also provision of clips to clip the tray to the computer casing. Furthermore, a user is required to use both hands to remove or insert a peripheral component via this system, which can sometimes be inconvenient and thus discourage the user to carry out this action. Moreover, the tray and fixing clips add cost to the system.

### Summary of the Present Invention:

The present invention seeks to provide an improved component mounting system.

According to an aspect of the present invention, there is provided a component mounting system for mounting a component within a casing, including a component support securable to a said casing; at least one post coupled to the component support and being operable to be engaged in at least one associated recess in the component, the at least one post being movable between a component engaging position and a component non-engaging position; and a post moving device operable to move and retain the at least one post in a selected one of said component engaging position and said component non-engaging position.

In practice, a component is located in the support and secured thereto by moving the or each post into the engaging position. The component remains fixed to the support until the post or posts are moved to the non-engaging position. The post moving device enables the component to be released from the support easily by retaining the posts in the selected position. In the preferred embodiment, described below, the component releasing and removing operations can be carried out in two steps using a single hand.

Advantageously, the support is fixed to the casing; which avoids the need to have an additional mounting component.

Advantageously, the at least one post is mounted on at least one sprung support. Preferably, the at least one sprung support biases the at least one post towards the component engaging position.

In the preferred embodiment, the post moving device is slidable between two positions so as to remove and retain the at least one post in either said component engaging position or said component non-engaging position.

Advantageously, the system provides for grounding of a component through the component support and/or through the at least one post.

The casing could be in the form of a chassis.

According to another aspect of the present invention, there is provided a computer including a casing and a component mounting system for mounting a component within the casing, the component mounting system including a component support secured to the casing; at least one post coupled to the component support and being operable to be engaged in at least one associated recess in the component, the at least one post being movable between a component engaging position and a component non-engaging position; and a post moving device operable to move and retain the at least one post in a selected one of said component engaging position and said component non-engaging position.

According to another aspect of the present invention, there is provided a component mounting system for mounting a component within a casing, including a component support securable to a casing ; at least one post mounted on at least one sprung member, which sprung member is mounted to the support, the at least one post being operable to be engaged in at least one associated recess in the component and being movable between a component engaging position and a component non-engaging position; and a post moving device slidable relative to the at least one post and operable to move and retain the at least one post between said component engaging position and said component non-engaging position.

According to another aspect of the present invention, there is provided a computer casing including a component mounting system for mounting a component within the casing, including a component support securable to the casing ; at least one post mounted on at least one sprung member, which sprung member is mounted to the support, the at least one post being operable to be engaged in at least one associated recess in the component and being movable between a component engaging position and a component non-engaging position; and a post moving device slidable relative to the at least one post and operable to move and retain the at least one post between said component engaging position and said component non-engaging position.

### Description of the Drawings:

Embodiments of the present invention are described below, by way of example only, with reference to the accompanying drawings, in which:
Figure 1 shows a perspective view from above of an example of personal computer with a top cover of the computer casing removed and showing fitted therewithin an embodiment of component mounting system;
Figure 2 shows a perspective view from above of the component mounting system of Figure 1;
Figure 3 shows a perspective view from below of the system of Figure 2 with the component removed;
Figure 4 shows a perspective view of an embodiment of post and sprung support member for the system of Figures 2 and 3;
Figures 5a and 5b are, respectively, partial views from below of the system of Figures 2 and 3 showing engaging pins in the engaging and non-engaging positions, respectively;
Figure 6 is a perspective view both from below of an alternative embodiment of sliding pin-moving device;
Figure 7 is a perspective view from below of an alternative embodiment of component support for use with the sliding device of Figure 6; and
Figure 8 is a perspective view from above of another embodiment of component mounting system.

### Description of the Preferred Embodiments:

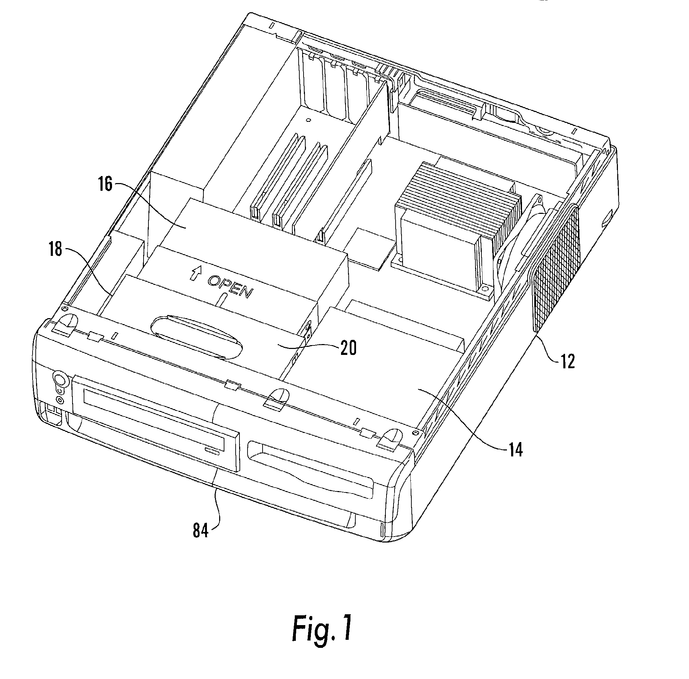

Referring to Figure 1, the example of personal computer 10 shown includes a casing 12 of which the top has been removed to allow access to the components within the casing 12. The computer 10 is of conventional form and includes, amongst other typical components, a floppy disc drive 14 and a CD-ROM drive 16. The CD-ROM drive 16 is provided with an embodiment of component mounting system 18.

The component mounting system 18 is provided with a component support or chassis frame 20 which is fixed to the casing 12 by any suitable means, such as by rivets, bolts, welding and the like. The frame 20 could, of course, also be formed integrally with the casing 12.

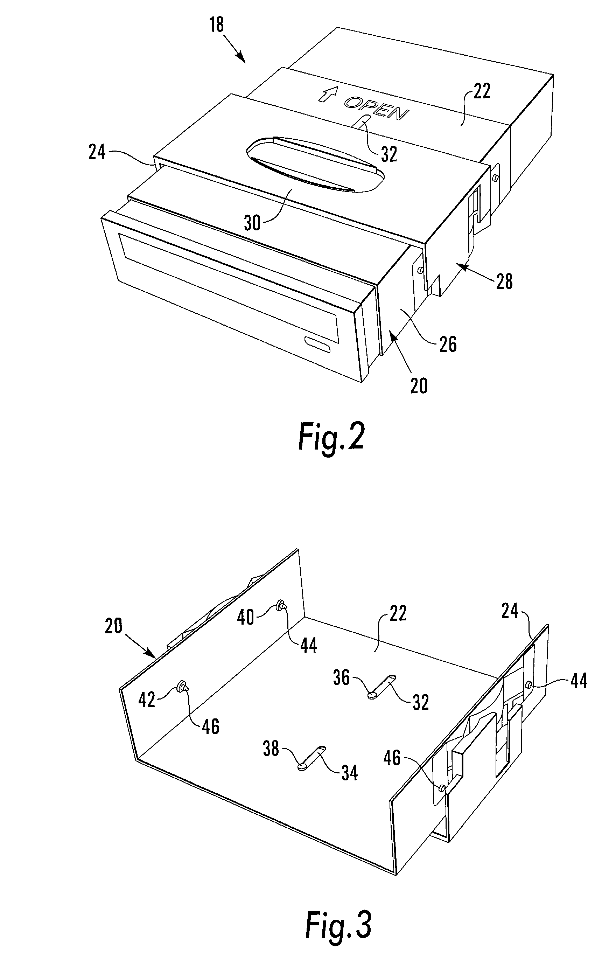

Referring now to Figures 2 and 3, there is shown in better detail the component mounting system 18 separated from the computer 10 and casing 12. The component support or chassis frame 20 is shown in simplified form in Figures 2 and 3 as it is not shown with the means for fixing it to the casing 12 or the electrical coupling to ground potential.

The chassis frame 20 is provided with a first plate member 22 from which extend first and second walls 24, 26. The upper surface of the plate member 22 is provided with depictions of the words "open" and "closed" by engraving, printing or the like, together with appropriate arrows. In Figure 2, only the word "open" and the arrow associated therewith are visible, the word "closed" and its associated arrow being hidden by the slider 28. They serve the purpose of indicating in which direction the slider 28 must be moved to unlock the component (in this example the CD-ROM drive) 16 from the mounting system 18, as is described in detail below. The word "closed" and its associated arrow are located on the plate member 22 around the position of arrowhead 30.

The plate member 22 is provided with elongate slots 32, 34 which acts as guides for pins 36, 38 provided on the underside of the slider 28.

Each wall 24, 26 is provided, in this example, with two round apertures 40, 42 through which metal posts can pass, as described below.

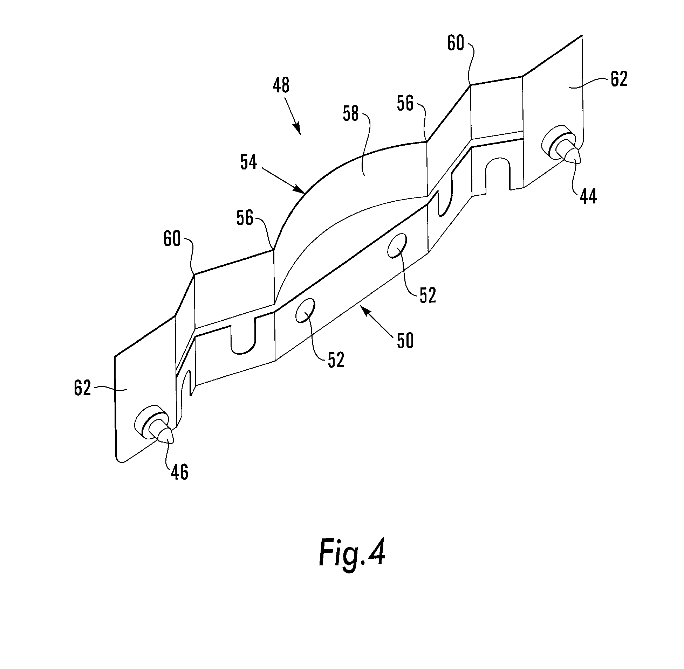

Referring to Figure 4, there is shown an embodiment of post support and guiding device 48 of which there are provided two in the embodiment shown in Figures 2 and 3.

The device 48 is formed of a resilient material having spring-like properties, for example spring steel or the like. It includes a mounting section 50 provided with two holes 52 which receive rivets to rivet the mounting section 50 and hence the device 48 to a respective wall 24, 26 of the chassis frame 20. The device 48 is also provided with a resilient member 54 having a contoured configuration as shown in Figure 4, described below in further detail. At the ends of the device 48 there are provided the metal posts 44, 46.

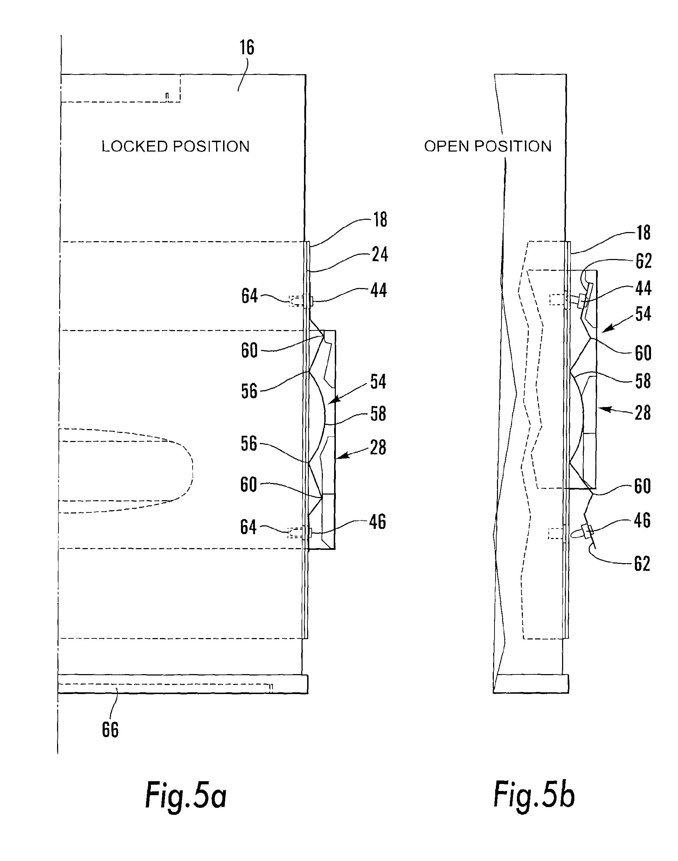

Referring now to Figures 5a and 5b, it can be seen how the slider 28 co-operates with the resilient member 54 to adjust and control the position of the pins 44 and 46. The resilient member 54 provides two fulcrums 56 which rest on the respective wall 24 (or 26). They also provide a raised central dome 58 between the two fulcrums 56 and two shoulders 60 which are connected at flange portions 62 to the posts 44 and 46.

Each side wall of the slider 28 is provided with an internal profile which acts upon the raised dome 58 and the shoulders 60 either to engage the pins 44 and 46 into associated recesses 64 of the drive 16 or to disengage the pins 44 and 46, as follows. In the position shown in Figure 5a, the slider is in the "closed" position and its internal walls bear upon the shoulders 60 to urge them towards the wall 24 (or 26) and push the pins 44 (or 46) into the recesses 64. Each side wall of the slider 28 is provided with an aperture or internal recess which ensures that in the engaged position shown in Figure 5a, the raised dome 58 of the device 48 is not pushed downwardly in any way.

Referring now to Figure 5b, when the slider 28 is moved towards the open position (upwardly in the view of Figure 5b) the side walls of the slider 28 are slid beyond contact with the shoulders 60, while the raised dome 58 is pressed down by the internal profile of the side walls of the slider 28. The act of pressing down the dome 58, through the fulcrums 56, causes the flanges 62 and, as a result, the posts 44 and 46 to be raised relative to the walls 24 (and 26) of the chassis frame 20, thereby disengaging the posts 44 and 46 from the component 16. In this disengaged or open position, the component 16 had be slid relative to the mounting system 18 and out of the computer casing 12.

In the preferred embodiment, the resilient member 54 is formed so as to bias the pins 44, 46 in their component engaging positions when it is not otherwise influenced by the slider 28.

Not shown in Figures I to 5b are electrical connections which would be provided. These can be any convenient type and disengaged in any appropriate manner, as a skilled person will know.

Thus, in order to remove a CD-ROM drive or other component 16 from the computer casing, the user needs only to remove the cover of the computer casing 12 slide the slider 28 in the direction of the "open" arrow, which causes the pins 44, 46 to be disengaged from the case of the drive 16 and then to slide the drive out from the front of the computer casing 12. At the same time, the user simply needs to unplug the electrical connections to the drive 16 in the case where this is not achieved automatically on the simple sliding of the drive 16 out of the computer casing 12.

In order to fit a new drive 16 into the computer casing 12 the user simply needs to ensure that the slider 28 is slid to the "open" position, then to slide the drive 16 into the slot in the front of computer casing 12 and, once this has been done, to slide the slider 28 in the direction of the "closed" arrow which would at that time be visible. This sliding action moves the pins 44, 46 into the locked position shown in Figure 5a. In the case where the electrical terminals on the disc drive 16 are not simultaneously plugged into the appropriate sockets of the computer 10, the user simply needs to plug these in the appropriate manner.

In order to facilitate location of the drive 16 relative to the mounting system 18, there are preferably provided suitable stops (not shown) prevent further movement of the drive 16 relative to the chassis 12 once it has reached the correct position. The stops could either be located within the casing 12 behind the normal engaged position of the drive 16 or at the front of the casing 12 to abut the front face plate 66 of the drive 16.

It will be apparent that the elongate slots 32, 34 in the plate member 22 of the chassis frame 20 will provide stops to the movement of the slider 28. If desired, any other stops may also be provided.

It will be apparent that the process for removing and inserting a drive 16 into the computer 10 by this system is a relatively easy operation which can be performed by the user and hence without the need for high servicing costs. Furthermore, the system provides positive locking action of the posts 44, 46 into the case of the drive 16, which assists not only with ensuring that the drive 16 is properly locked into the computer casing 12 but also ensures both electrical coupling with the case of the drive 16 so that the ground connection to the case of the drive 16 can be effected through the pins 44, 46.

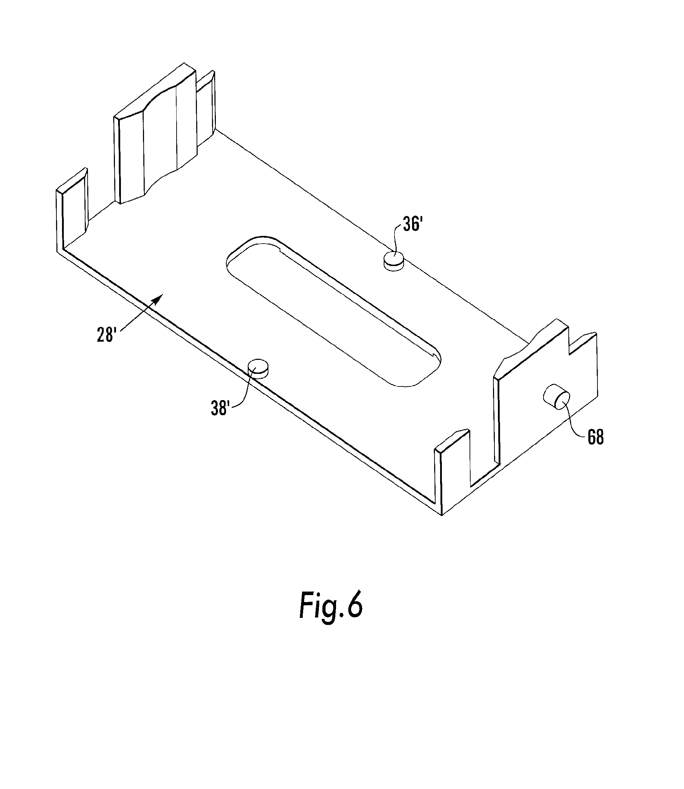

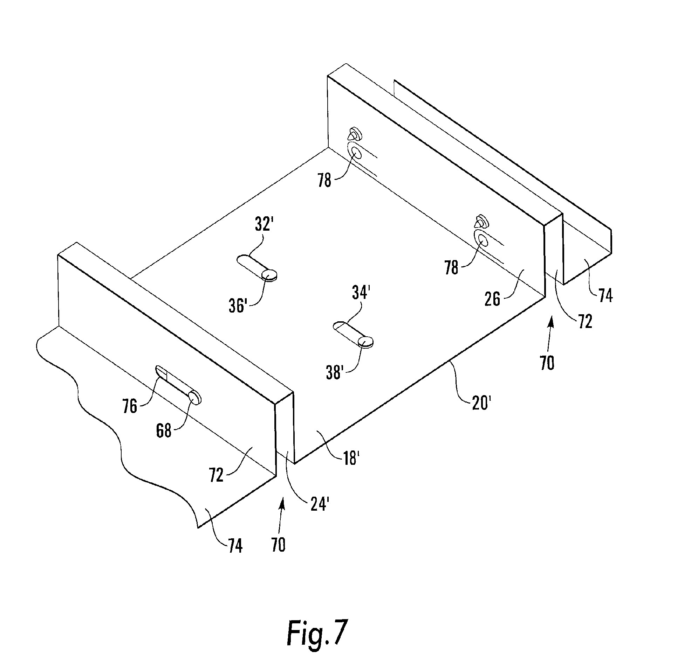

Another embodiment of component mounting system is shown in Figures 6 and 7. Where those parts of the system are the same or equivalent to parts of the system 18 shown in Figures 1 to 5b, they have been given the same reference numerals followed by an apostrophe ('). As their structure and function will be apparent from the above description relating to the embodiment of Figures 1 to 5b, they are not be described in detail below.

The slider 28' is provided on its side walls with first and second pins 68 (only one being visible in Figures 6 and 7).

Referring to Figure 7, the chassis frame 20' is provided with flanges 70 each of which includes a first portion 72 substantially parallel to the depending walls 24' and 26' and with a second portion 74 which is substantially perpendicular to the first portion 72 and which can be used for securing the chassis frame 20 to the computer casing 12. The first portion 72 is provided with horizontally extending elongate slots 76 (only one of which is visible in Figure 7) which receive and guide the pins 68. It will be apparent that the slots 76 prevent the slider 28' from being removed from the system 18 by a lifting action.

Figure 7 also shows the depending walls 24' and 26' being provided with in-stamped bumpers 78 which are used to align the drive 16 during installation.

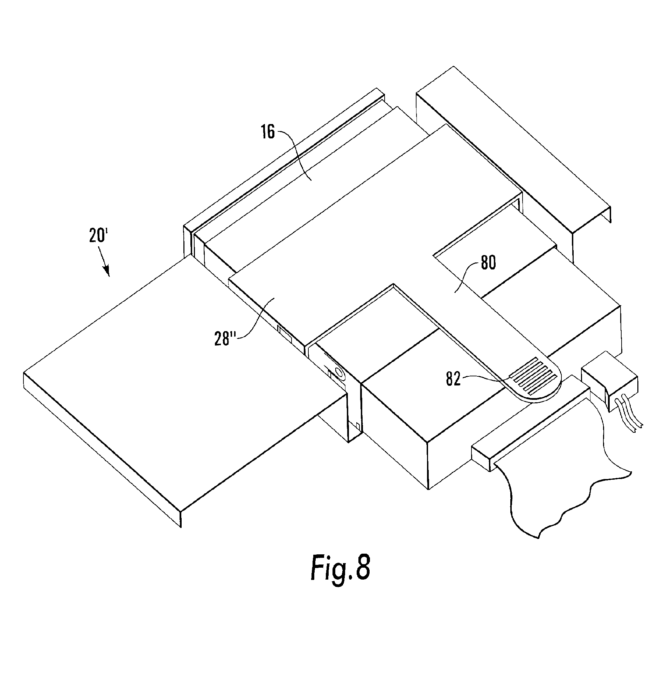

Referring now to Figure 8, another embodiment of slider 28" is shown, which is provided with a tab 80 having a suitable finger grip 82 for assisting the user in sliding the slider 28" back and forth between its open and closed positions. Figure 8 shows the tab 80 extending rearwards, in practice into the computer casing 12. However, in some embodiments, the tab 80 could be made to extend forwardly, through an appropriate slot (not shown) in the casing 12 out of the casing 12 but which the internal space provided by the front bezel 84 of the computer 10. In this manner, the slider 28" can be operated (and thus the pins 44, 46 can be engaged and disengaged) from the outside of the computer casing 12 and therefore without the need to remove the cover of the computer casing 12. In this latter embodiment, the chassis frame 20 could be reversed such that its locked position is the rear-most position as viewed from the front of the computer 10 and its open position is the forward-most position from this view. This would enable the tab 80 to be in a retracted position when the slider 28 is in a locked position (and hence a drive 16 mounted in the computer 12) and pulled out from the front of the computer 10 to unlock the pins 44, 46 and hence the drive 16. The finger support 82 could usefully be hidden behind the front bezel 84.

It will be apparent to the skilled person that modifications can be made to the described embodiments without departing from the scope of the teachings herein and within the scope of the claims.

## Claims

1. A component mounting system for mounting a component (16) within a casing (12), including a component support (22) securable to a said casing; at least one post (44,46) coupled to the component support and being operable to be engaged in at least one associated recess in the component, the at least one post (44,46) being movable between a component engaging position and a component non-engaging position; and a post moving device (28) operable to move and retain the at least one post in a selected one of said component engaging position and said component non-engaging position.

2. A system according to claim 1, wherein the at least one post (44,46) is mounted on at least one sprung support (48).

3. A system according to claim 2, wherein the at least one sprung support (48) biases the at least one post towards the component engaging position.

4. A system according to any preceding claim, wherein the post moving device (28) is slidable between two positions so as to remove and retain the at least one post (44,46) in either said component engaging position or said component non-engaging position.

5. A system according to any preceding claim, wherein the system provides for grounding of a component (16) through at least one of the component support (22) and the at least one post (44,46).

6. A system according to any preceding claim, wherein the casing (12) is in the form of a chassis.

7. A computer including a casing (12) and a component mounting system (18) for mounting a component (16) within the casing, the component mounting system including a component support (22) secured to the casing; at least one post (44,46) coupled to the component support and being operable to be engaged in at least one associated recess in the component (16), the at least one post (44,46) being movable between a component engaging position and a component non-engaging position; and a post moving device (28) operable to move and retain the at least one post in a selected one of said component engaging position and said component non-engaging position.

8. A computer according to claim 7, wherein the at least one post (44,46) is mounted on at least one sprung support (48).

9. A computer according to claim 8, wherein the at least one sprung support (48) biases the at least one post towards the component engaging position.

10. A computer according to claim 7, 8 or 9, wherein the post moving device (28) is slidable between two positions so as to remove and retain the at least one post (44,46) in either said component engaging position or said component non-engaging position.

11. A computer according to any one of claims 7 to 10, wherein the system provides for grounding of a component (16) through at least one of the component support (22) and the at least one post (44,46).

12. A computer according to any one of claims 7 to 11, wherein the casing is in the form of a chassis.

13. A computer according to any one of claims 7 to 12, wherein the computer is a personal computer.
